# EUROPÄISCHE PATENTSCHRIFT

(11) **EP 0 635 230 B1**
(45) Veröffentlichungstag und Bekanntmachung des Hinweises auf die Patenterteilung: **19.11.1997**
(21) Anmeldenummer: 93111876.4
(22) Anmeldetag: 23.07.1993
(51) Int. Cl.: A47J 31/057

(54) **Kaffeemaschine**
Coffee maker
Machine à café

(43) Veröffentlichungstag der Anmeldung: 25.01.1995
(73) Patentinhaber: Eugster/Frismag AG, CH-8590 Romanshorn (CH)
(72) Erfinder: Eugster, Arthur, CH-8590 Romanshorn (CH); Fischer, Daniel, CH-8590 Romanshorn (CH)
(74) Vertreter: Grünecker, Kinkeldey, Stockmair & Schwanhäusser Anwaltssozietät

(56) Entgegenhaltungen:
- EP-A- 0 004 659
- EP-A- 0 353 425
- DE-A- 2 952 556
- DE-A- 4 204 746
- FR-A- 2 588 739
- GB-A- 2 139 481

## Beschreibung

Die Erfindung bezieht sich auf eine Kaffeemaschine, bei der das Heißwasser für den Brühvorgang in einem üblicherweise elektrisch beheizten Durchlauferhitzer erzeugt wird, der mit einer wasserführenden Leitung mit einem Frischwassertank in Verbindung steht und ein Rückschlagventil aufweist. Der Durchlauferhitzer liegt dabei unter der tiefsten Stelle des Frischwassertanks und das Rückschlagventil ist in Richtung zum Durchlauferhitzer hin offen, so daß sich der Durchlauferhitzer durch die Schwerkraft des Wassers selbständig füllt. Der Auslauf des Durchlauferhitzers ist an ein Steigrohr angeschlossen, das in einem Brühkopf endet, von dem aus sich das Brühwasser in einem Filterbehälter ergießen kann. Sobald das Wasser im Durchlauferhitzer zu Kochen beginnt, entsteht im Durchlauferhitzer Druck, der das Rückschlagventil schließt und das kochende Wasser aus dem Brühkopf ausstößt. Nachdem das Wasser ausgestoßen ist, kann sich der Durchlauferhitzer wieder mit Frischwasser füllen und der Zyklus beginnt von neuem.

Derartige Kaffeemaschinen bieten keine Möglichkeit, alternativ zum Brühwasser auch heißen Dampf zu erzeugen, um beispielsweise Milch zu erhitzen oder aufzuschäumen, was für die Herstellung von Cappuccino erforderlich wäre. Um Cappuccino herzustellen, bedient man sich üblicherweise einer Espresso-Maschine, die aber wegen der dort notwendigen Hochdruckpumpe gegenüber einer üblichen Kaffeemaschine relativ teuer ist. Darüberhinaus ist es für Cappuccino nicht notwendig, Espresso zu verwenden, sondern es genügt, der heißen Milch normalen Kaffee zuzusetzen. Manche Cappuccino-Trinker ziehen einen Filterkaffee sogar dem etwas bitterer schmeckenden Espresso vor. Um einen solchen Cappuccino herzustellen, braucht man deshalb eine normale Filterkaffee-Maschine und eine Espressomaschine, will man die Milch nicht auf einem separaten Herd oder in der Mikrowelle erhitzen.

Der Oberbegriff des unabhängigen Anspruchs 1 ist aus die Dokumente DE-A-2 952 556 und FR-A-2 588 739 bekannt.

Der vorliegenden Efindung liegt die Aufgabe zugrunde, eine Kaffeemaschine anzugeben, mit der sich auch Cappuccino herstellen läßt.

Diese Aufgabe wird mit den kennzeichnenden Merkmalen des Anspruches 1 gelöst.

Mit der vorliegenden Kaffeemaschine ist es auf einfache Weise möglich, wahlweise entweder Brühwasser für einen Kaffeeaufguß oder Dampf zum Erhitzen und Aufschäumen von Milch zu erzeugen. Mit der nur für die Dampferzeugung vorgesehenen Pumpe ist es auf einfache Weise möglich, die für die Dampfbildung erforderliche genaue Dosierung des Wasserdurchlaufs vorzunehmen. Die Dosierung ist dabei so zu wählen, daß bei der vorgegebenen Heizleistung des Durchlauferhitzers trockener Dampf in einer konstanten Durchflußmenge entsteht. Wird die Durchflußmenge zu hoch gewählt, ist der Dampf zu stark gesättigt und das mit Dampf zu erhitzende Getränk wird unnötig verwässert. Bei zu geringer Dosierung kann es zu einer unangenehmen Geräuschbildung im Durchlauferhitzer kommen, da eintretendes Wasser schlagartig verdampft wird. Außerdem besteht die Gefahr, daß der Durchlauferhitzer partiell überhitzt wird. Zwischen diesen beiden Extremen liegt ein relativ breiter Spielraum, der die Dosierung unkritisch macht. Im Gegensatz zu Espresso-Maschinen, bei denen es bereits bekannt ist, zur Dampferzeugung die dort ohnehin vorhandene Pumpe mit einer erniedrigten Förderleistung zu benutzen, kann die hier vorzusehende Pumpe sehr viel einfacher und billiger aufgebaut sein, da sie keinen nennenswerten Druck zu erzeugen braucht und lediglich der Dosierung dient.

In den in den Ansprüchen 2 und 3 angesprochenen Ausführungsformen sind unterschiedliche Mittel angegeben, um im Pumpenbetrieb den Durchlauferhitzer mit dem Dampfauslaß zu verbinden. Bei der Ausführungsform nach Anspruch 2 ist der Durchlauferhitzer mit einem separaten Durchlaufrohr für die Dampfbildung versehen, das einlaufseitig mit der Pumpe und auslaufseitig mit dem Dampfauslaß in Verbindung steht. Zwischen dem Frischwassertank und den beiden Durchlaufrohren liegt ein Zweiwegeventil, das den Wasserzulauf wahlweise zu dem einen oder dem anderen Durchlaufrohr freigibt. In der Ausführungsform nach Anspruch 3 wird die Durchlaufstrecke des Durchlauferhitzers gemeinsam für die Heißwasserbildung und die Dampfbildung benutzt. Am auslaufseitigen Ende des Durchlauferhitzers ist dort ein Zweiwegeventil vorgesehen, mit dem der Auslauf des Durchlauferhitzers wahlweise mit dem Brühkopf oder dem Dampfauslaß verbindbar ist. Diese Ausführungsform ist besonders einfach, weil der Durchlauferhitzer mit nur einem Durchlaufrohr versehen zu sein braucht, das sowohl für die Heißwasseraufbereitung, als auch für die Dampfbildung benutzt wird. Das Rückschlagventil, welches bei der Kaffeezubereitung das intermittierende Befüllen des Durchlauferhitzers bewirkt, wird im Dampfbetrieb, also im Betrieb, in dem die Pumpe eingeschaltet ist, durch den Druck, den die Pumpe aufbringt, automatisch gesperrt, so daß keine weiteren Mittel vorzusehen sind, um zu verhindern, daß Dampf in den Frischwasserbehälter zurückschlägt.

Bevorzugte Weiterbildungen sind in den weiteren Unteransprüchen angegeben.

Anhand von in der Zeichnung dargestellten Ausführungsbeispielen wird die Erfindung im folgenden näher erläutert. Es zeigen:
- Figur 1: eine Ausführungsform mit einem zwei Durchlaufrohre aufweisenden Durchlauferhitzer;
- Figur 2: eine Ausführungsform mit einem nur ein Durchlaufrohr aufweisenden Durchlauferhitzer, und
- Figur 3: den Durchlauferhitzer nach dem Ausführungsbeispiel nach Figur 1.

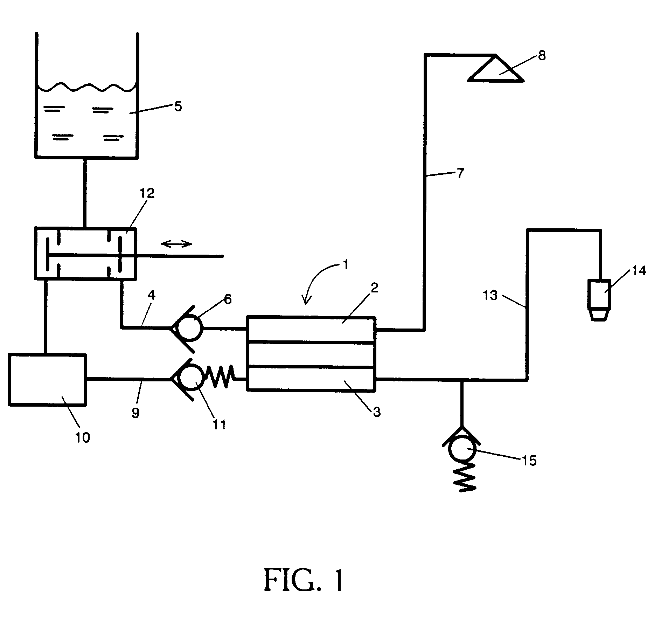

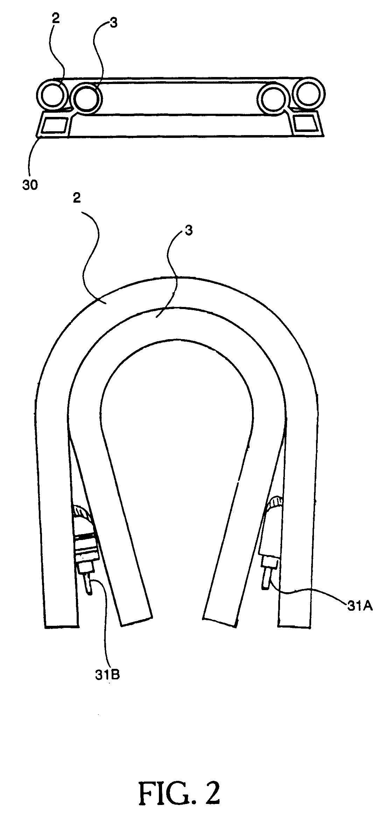

Die Figuren 1 und 2 zeigen schematisch den Aufbau der Kaffeemaschine. In dem Ausführungsbeispiel nach Fig. 1 sind in einem Heizblock 1 zwei Durchlauferhitzerrohre 2 und 3 angeordnet. Der Einlauf des Durchlaufrohres 2 steht mit einer wasserführenden Leitung 4 mit einem Frischwassertank 5 in Verbindung. In der Leitung 4 ist ein Rückschlagventil 6 angeordnet. Der Auslauf des Durchlaufrohres 2 ist an ein Steigrohr 7 angeschlossen, das in einem Brühkopf 8 endet.

Das zweite Durchlaufrohr 3 ist einlaßseitig ebenfalls mit dem Frischwassertank 5 verbunden. In der Verbindungsleitung 9 befindet sich eine Pumpe 10 und ein Druckventil 11. Beide Leitungen 4 und 9 werden alternativ von einem Zwei-Wegeventil 12 mit Frischwasser versorgt. Der Auslauf des Durchlaufrohres 3 steht über eine Dampfleitung 13 mit einer Dampfdüse 14 in Verbindung. Die Dampfleitung 13 ist mit einem Sicherheitsventil 15 versehen, das lediglich dazu dient, den entstehenden Dampf abzulassen, wenn die Dampfdüse 14 verstopft sein sollte. Das Druckventil 11 ist dann nicht erforderlich, wenn die Pumpe selbst so ausgebildet ist, daß sie ein Rückschlagen von Wasser oder Dampf verhindert.

Figur 2 zeigt den Heizblock 1 nach Figur 1 im Querschnitt und in Draufsicht. Er enthält einen Grundkörper 30, in dem in einer keramischen Masse ein elektrischer Widerstandsdraht angeordnet ist. An den Enden befinden sich die beiden elektrischen Anschlüsse 31A und 31B. Einstückig mit diesem Grundkörper 30 integriert ist ein erstes Durchlaufrohr 3, das mit dem Grundkörper 30 über einen Steg 32 verbunden ist. Parallel zu dem ersten Durchlaufrohr 3 liegt ein zweites Durchlaufrohr 2, das mit dem Grundkörper 30 verlötet ist. Der Grundkörper 30 und die beiden Durchlaufrohre 2, 3 bestehen aus Metall.

Im folgenden wird die Wirkungsweise der Kaffeemaschine nach Fig.1 näher erläutert. Für den Fall, daß ein Kaffeeaufguß hergestellt werden soll, wird das Zwei-Wegeventil 12 in eine Stellung gebracht, in der sich das Durchlaufrohr 2 mit Wasser füllen kann. Sobald in diesem Durchlaufrohr 2 das Wasser zu Kochen beginnt, wird durch den sich aufbauenden Druck das Rückschlagventil 6 geschlossen und das Brühwasser aus dem Brühkopf 8 ausgestoßen. Dabei fällt der Druck im Durchlaufrohr 2 ab und es kann sich über das Rückschlagventil 6 erneut mit Wasser füllen und den nächsten Brühzyklus beginnen. Wird zum Aufschäumen von Milch Dampf benötigt, wird das Zwei-Wegeventil 12 in die andere Stellung gebracht und gleichzeitig die Pumpe 10 aktiviert. Dabei ist das Durchlaufrohr 2 vom Frischwassertank 5 getrennt und demnach inaktiv. Die Pumpe 10 fördert nun Frischwasser in das Durchlaufrohr 3 in einer so geringen Dosierung, daß das Wasser im Durchlaufrohr 3 kocht und trockener Dampf aus der Dampfdüse 14 ausgestoßen wird. Sobald die Pumpe 6 abgeschaltet wird, ist die Dampfbildung unterbrochen und es kann jederzeit wieder auf die Herstellung von Brühwasser übergegangen werden.

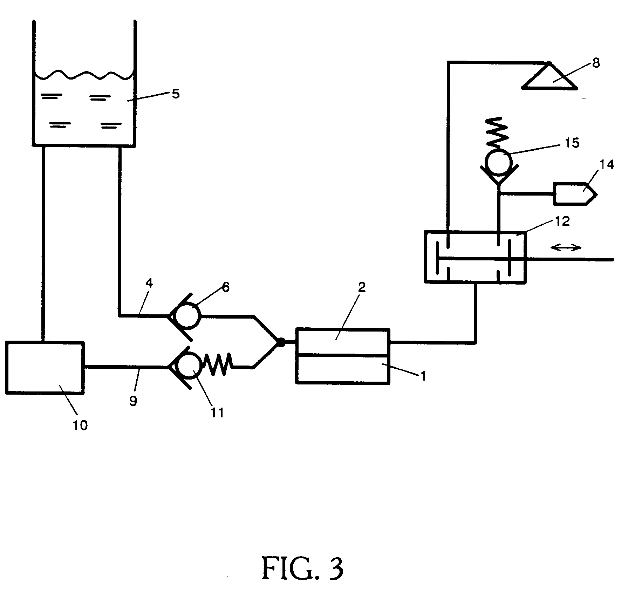

Das Ausführungsbeispiel nach Figur 3 unterscheidet sich von demjenigen nach Figur 1 dadurch, daß der Heizblock 1 lediglich ein Durchlaufrohr 2 vorsieht, welches gemeinsam für das Brühwasser bzw. die Dampfbildung benutzt wird. Das Zweiwegeventil 12 ist in diesem Ausführungsbeispiel am auslaufseitigen Ende des Heizblocks angeordnet und gibt den Weg entweder zum Brühkopf 8 bzw. zum Dampfauslaß 14 frei. Mit dem Einschalten der Pumpe 10 und dem entsprechenden Einstellen des Zweiwegeventils 12 wird eine dosierte Menge Wasser in das Durchlaufrohr 2 freigegeben, kommt dort zum Verdampfen und wird aus dem Dampfauslaß 14 ausgestoßen. Durch den Druckaufbau über die Pumpe 10 wird automatisch das Rückschlagventil 6 geschlossen, wodurch verhindert wird, daß gleichzeitig auch Frischwasser über die Leitung 4 in das Durchlaufrohr 2 gelangt.

Die Pumpe 10 kann selbstverständlich mit dem Zweiwegeventil 12 zwangsgekoppelt sein, um sicherzustellen, daß das Zweiwegeventil 12 zusammen mit dem Ein- und Ausschalten der Pumpe in die jeweils richtige Lage gebracht wird.

Es besteht auch die Möglichkeit, den Frischwassertank 5 in zwei getrennte Behälter zu unterteilen, um das Wasser für die Dampfbildung aus dem einen Behälter und das Wasser für das Brühwasser nur aus dem anderen Behälter zu entnehmen. Damit kann erreicht werden, daß auch dann, wenn der Behälter für das Brühwasser völlig leergefahren wurde, zur anschließenden Dampfbildung noch ausreichend Wasser zur Verfügung steht und der Behälter nicht erst wieder aufgefüllt werden muß.

## Patentansprüche

1. Kaffeemaschine, mit einem Frischwassertank (5), der über eine mit einem Rückschlagventil (6) versehene Verbindungsleitung (4) mit einem einen Durchlauferhitzer (2, 3) aufweisenden Heizblock (1) verbunden ist, dessen Auslauf über ein Steigrohr (7) in einem Brühkopf (8) mündet, **dadurch gekennzeichnet,** daß zur Dampferzeugung eine Pumpe (10) vorgesehen ist, mit der aus dem Frischwassertank (5) Wasser mit dosierbarem Durchlauf entnehmbar und dem Durchlauferhitzer zuführbar ist und daß Mittel (12) vorgesehen sind, um im Pumpenbetrieb den Frischwassertank (5) mit einem Dampfauslaß (14) zu verbinden.

2. Kaffeemaschine nach Anspruch 1, **dadurch gekennzeichnet,** daß der Heizblock (1) mit einem separaten Durchlaufrohr (3) für die Dampfbildung versehen ist, das einlaufseitig mit der Pumpe (10) und auslaufseitig mit dem Dampfauslaß (14) in Verbindung steht, und daß zwischen dem Frischwassertank (5) und den beiden Durchlaufrohren (2, 3) ein Zweiwegeventil (12) vorgesehen ist, das den Wasserzulauf wahlweise zu dem einen oder dem anderen Durchlaufrohr (2, 3) freigibt.

3. Kaffeemaschine nach Anspruch 1, **dadurch gekennzeichnet,** daß am auslaufseitigen Ende des Durchlauferhitzers (2) ein Zweiwegeventil (12) vorgesehen ist, mit dem der Auslauf des Durchlauferhitzers wahlweise mit dem Brühkopf (8) oder dem Dampfauslaß (14) verbindbar ist.

4. Kaffeemaschine nach einem der Ansprüche 1 bis 3**, dadurch gekennzeichnet,** daß in der Verbindungsleitung zwischen der Pumpe (10) und dem zugeordneten Durchlaufrohr (2,3) ein Druckventil (11) vorgesehen ist.

5. Kaffeemaschine nach einem der Ansprüche 1 bis 4, **dadurch gekennzeichnet,** daß an der Verbindungsleitung (13) zwischen dem Durchlaufrohr (2, 3) und dem Dampfauslaß (14) ein Sicherheitsventil (15) angeordnet ist.

## Claims

1. A coffee machine comprising a fresh-water reservoir (5) connected to a heating block, which is provided with a flow heater (2, 3), via a connection line (4) having provided therein a check valve (6), the outlet of said heating block terminating in a coffee-making head (8) via an ascending pipe(7), **characterized in that** a pump (10) with the aid of which water can be taken from said fresh-water reservoir at a dosed flow and supplied to said flow heater is provided for steam generation and that means (12) are provided for connecting said fresh-water reservoir (5) to a steam outlet (14) during pump operation.

2. A coffee machine according to claim 1, **characterized in that** said heating block (1) is provided with a separate flow pipe (3) for steam generation, said flow pipe (3) communicating with said pump (10) at the inlet side and with said steam outlet (14) at the outlet side, and that a two-way valve (12) which selectively releases the water supply to said one or said other flow pipe (2, 3) is provided between said fresh-water reservoir (5) and said two flow pipes (2, 3).

3. A coffee machine according to claim 1, **characterized in that** a two-way valve (12) with the aid of which the outlet of said flow heater is selectively connectable to said coffee-making head (8) or said steam outlet (14) is provided at the outlet end of said flow heater (2).

4. A coffee machine according to any one of claims 1 to 3, **characterized in that** a pressure valve (11) is provided in the connection line between said pump (10) and the associated flow pipe (2, 3).

5. A coffee machine according to any one of claims 1 to 4, **characterized in that** a safety valve (15) is arranged on the connection line (13) between said flow pipe (2, 3) and said steam outlet (14).

## Revendications

1. Machine à café comportant un réservoir (5) d'eau fraîche qui, par l'intermédiaire d'une conduite (4) de raccordement pourvue d'un clapet (6) antiretour, est relié à une unité (1) de chauffage qui comprend un chauffe-eau rapide (2, 3) et dont la sortie débouche dans une tête (8) de percolation par l'intermédiaire d'un tube (7) ascendant, **caractérisée** en ce que pour produire de la vapeur il est prévu une pompe (10) qui permet de prélever une quantité d'eau dosable dans le réservoir (5) d'eau fraîche et de l'amener au chauffe-eau rapide et que des moyens (12) sont prévus pour relier le réservoir (5) d'eau fraîche à une sortie (14) de vapeur lorsque la pompe fonctionne.

2. Machine à café selon la revendication 1, **caractérisée** en ce que l'unité (1) de chauffage est pourvue d'un tube (3) séparé de chauffe-eau rapide pour la formation de vapeur, lequel tube est relié côté entrée à la pompe (10) et côté sortie à la sortie (14) de vapeur et qu'il est prévu entre le réservoir (5) d'eau fraîche et les deux tubes (2, 3) de chauffe-eau rapide une vanne (12) à deux voies qui permet l'écoulement d'eau au choix vers l'un ou l'autre des tubes (2, 3) de chauffe-eau rapide.

3. Machine à café selon la revendication 1, **caractérisée** en ce qu'il est prévu à l'extrémité côté sortie du chauffe-eau rapide (2) une vanne (12) à deux voies qui permet de relier la sortie du chauffe-eau rapide au choix à la tête (8) de percolation ou à la sortie (14) de vapeur.

4. Machine à café selon l'une des revendications 1 à 3, **caractérisée** en ce qu'une soupape (11) de pression est prévue dans la conduite de raccordement entre la pompe (10) et le tube (2, 3) de chauffe-eau rapide associé.

5. Machine à café selon l'une des revendications 1 à 4, **caractérisée** en ce qu'une soupape (15) de sûreté est disposée sur la conduite (13) de raccordement entre le tube (2, 3) de chauffe-eau rapide et la sortie (14) de vapeur.
